# EUROPEAN PATENT SPECIFICATION

(11) **EP 2 319 152 B1**
(45) Date of publication and mention of the grant of the patent: **22.01.2014**
(21) Application number: 08808212.8
(22) Date of filing: 30.07.2008
(51) Int. Cl.: H02J 3/00, H02J 3/14, F24D 17/00, F24D 17/02, H02J 7/34

(54) **A PLANT FOR LOW-POWER PREFERABLY SINGLE-PHASE ELECTRICAL SUPPLY TO BUILDINGS FOR RESIDENTIAL AND NON-RESIDENTIAL USE**
VORZUGSWEISE EINPHASIGES ELEKTRISCHES KRAFTWERK ZUR VERSORGUNG VON WOHN- UND GEWERBEGEBÄUDEN
ÉQUIPEMENT D'ALIMENTATION ÉLECTRIQUE BASSE PUISSANCE, DE PRÉFÉRENCE MONOPHASÉE, DE BÂTIMENTS À USAGE RÉSIDENTIEL ET NON RÉSIDENTIEL

(43) Date of publication of application: 11.05.2011
(60) Divisional application: 13178704.6
(73) Proprietor: Delli Compagni, Emidio Emilio, 64100 Piano della Lenta (TE) (IT)
(72) Inventor: Delli Compagni, Emidio Emilio, 64100 Piano della Lenta (TE) (IT)
(74) Representative: Gotra, Stefano
(86) International application number: PCT/IT2008/000518
(87) International publication number: WO 2010/013265

(56) References cited:
- WO-A-01/37392
- WO-A-01/65186
- DE-A1- 4 109 511
- DE-A1- 4 414 861
- US-A- 4 066 913
- US-A- 4 971 136
- US-A- 5 734 230
- US-A1- 2003 047 209
- US-A1- 2004 075 343
- US-B1- 6 487 509
- PALENSKY P ET AL: "Demand side management in private homes by using LonWorks" FACTORY COMMUNICATION SYSTEMS, 1997. PROCEEDINGS. 1997 IEEE INTERNATIO NAL WORKSHOP ON BARCELONA, SPAIN 1-3 OCT. 1997, NEW YORK, NY, USA,IEEE, US, 1 October 1997 (1997-10-01), pages 341-347, XP010255516 ISBN: 978-0-7803-4182-1

## Description

### Technical Field

The invention relates to a heating device and a plant for supplying electrical supply at low power, preferably single-phase, to residential and non-residential buildings.

In other terms the heating device and the plant of the present invention enables supply to all users with only electrical energy, thus eliminating the need for other forms of energy supply.

### Background Art

In modem-type civil buildings, whether for residential or non-residential use, a certain number of energetic systems are present, which enable activating of various types of services on the part of the occupants.

The services normally present in these buildings are:
lighting;
production of clean hot water;
heating;
use of small/large domestic electrical appliances and other electrically-functioning users (electrical/electronic users);
oven and stove (burners, oven, electric hotplates, etc);

other users consuming electricity.

Heating, production of clean hot water and the oven, which require quite high-level power to meet the needs of the users, are usually managed by devices, such as boilers, ovens and burners, supplied by gas, liquid, coal or wood fossil fuels, substantially to limit the use of electric power.

The actuation of all the listed services with only electrical energy requires the use of rather high level of electrical power which, normally, is not available in single phase on the supplier's grid. In any case, the electrical power required is supplied with some difficulty even in three-phase and is even more difficult to obtain for dwellings. For these reasons, there has traditionally been a combination of electrical energy and other forms of energy in supply to civil constructions.

The relatively lower costs for gas supply, together with the fact that gas boilers can make clean hot water available instantaneously, have led to gas being widely chosen as main energy source for boilers, instead of electric, for the production of clean hot water.

As is known, the use of fossil fuels leads to considerable problems of an environmental character, which, on the basis of the most recent standards for pollution control and the battle against global climate change, are measured according to the amount of carbon dioxide and greenhouse gases which are emitted into the atmosphere. All modem environmental standards impose limitations on users' carbon dioxide emission (CO2 and greenhouse gases) in the battle against climate change.

The clear intention of the modem environmental standards is thus to encourage all users, whether civil, industrial or commercial, to favour the use of electrical energy produced by renewable sources with respect to that produced using fossil fuels, such as to limit production and atmospheric emission of carbon dioxide and greenhouse gas, and therefore to limit global heating.

Examples of plant for electrical supply are known from documents US 2004/075343 and WO 01/65186

The main aim of the present invention is to provide a heating device and a plant for low-power electrical supply, preferably in single-phase, to residential and non-residential buildings which enables the consumption of fossil fuels to be considerably reduced.

A further aim of the present invention is to provide a plant which enables the consumption of electrical energy to be reduced on the part of all devices and users in residential and non-residential constructions, such that the electrical energy need can be covered by the use of renewable energy sources, both self-produced and bought.

### Disclosure of Invention

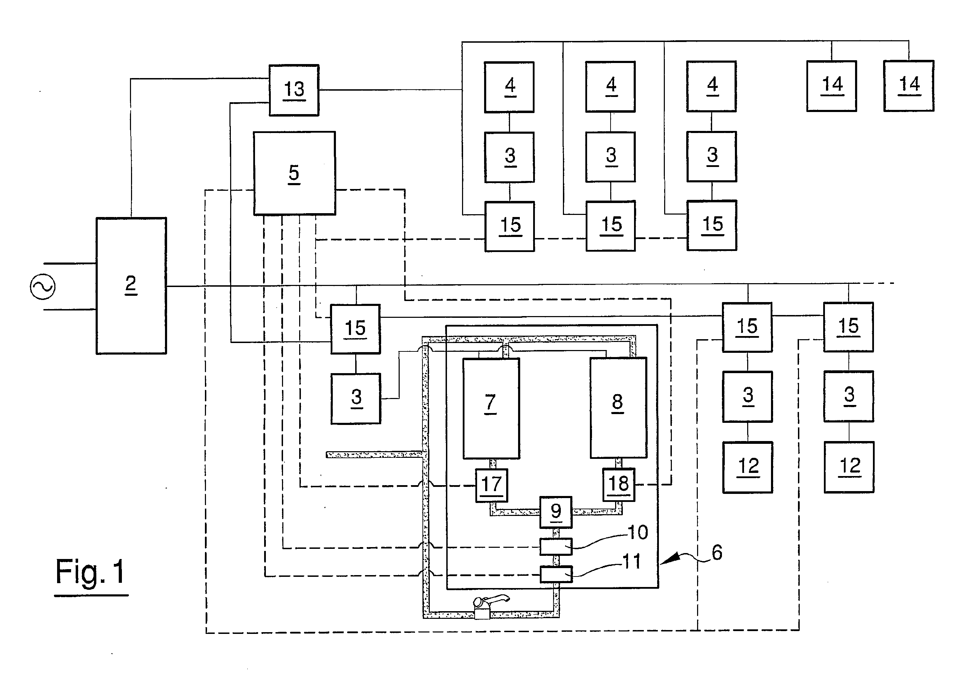

Further characteristics and advantages of the invention will better emerge from the detailed description that follows, with reference to the accompanying figure of the drawing, provided purely by way of nonlimiting example, which is a schematic representation of the plant of the present invention.

The plant of the present invention comprises a source of electrical power 2, preferably low-power and single-phase or three-phase. The source of electrical power 2 can be constituted, for example: by the urban electrical energy grid; electrical energy plants constituted by stand-alone renewable sources; electrical energy plants using renewable grid-connected sources; a combination of the above-listed solutions.

In the preferred embodiment of the plant, connection can be made both to the electric grid by means of a bi-directional counter, of known type, which enables both the taking from and the giving of self-produced electrical energy to the grid, as shown for example by the Italian norm relating to "exchange", and direct consumption of electrical energy produced by stand-alone plants before it is sent to the grid.

The plant further comprises a plurality of electrical connections 3, supplied by the source 2 by means of a supply circuit, which are predisposed to enable connection to the source 2 and the supply of electrical users 4 of various types.

The plant comprises a control device 5, for example an electronic processor such as a computer, which is predisposed to continuously measure overall absorption of electrical power on the part of electric users in order to compare overall absorption measured using a predetermined maximum value of available electrical power. As will be more clearly described herein below, the control device 5 is predisposed automatically to adopt some programmed control procedures.

The maximum predetermined power value is dictated by the supply on the part of the distributor of electrical power. In Italy, for example, the maximum electrical power value available for a dwelling is subdivided into levels of 3 kW, 4.5 kW, 6 kW up to10 kW in single-phase with supply voltage at 220V. For higher powers three-phase supply is 380V.

With the invention, though supplying all the users with electrical energy, the functioning of all users is ensured, with a drop in consumption, with supply in single-phase within 10Kw for residential constructions of a standard type (up to about 150 square metres area). Buildings having three-phase power above 10Kw are also supplied with considerably lower supply levels than is normally necessary.

The control device 5 is further predisposed to block or limit the supply of electrical power to certain electrical connections 3 if the overall absorption of electrical power measured exceeds the maximum predetermined value. This function is performed by the control device 5 by means of a first main operating algorithm which comprises: assigning to the electrical connections 3 predetermined indices of importance which overall define a scale of importance of the electrical connections 3; if the overall absorption of electrical power exceeds the maximum predetermined value, the first operating algorithm blocks or limits supply of electrical power to an electrical connection 3 on the basis of its index of importance, i.e. by blocking or limiting the supply of electrical power starting from the less important electrical connections and proceeding to those having greater importance up to when the total absorption of power returns below the maximum predetermined amount.

In a preferred embodiment of the plant, the operating algorithm includes at least three indices of importance for electrical connections. A first index of importance corresponds to a constant and unconditioned supply of electrical power. This first index of importance can be assigned to the connections destined to supply the electrical users which if deprived of electrical energy lead to considerable drawbacks, such as for example freezers, refrigerators, alarm plants or fire alarm plants, internal lighting and others.

A second index of importance corresponds to a supply of electrical power subordinated to a comparison, to be done before turning the electrical user on, between the nominal power absorbed by the electrical user and the power available on reaching the maximum predetermined value. The electrical power available on reaching the maximum predetermined value corresponds to the difference between the maximum electrical power available at the source of electrical power and the overall absorption of electrical power at present in use. If the available electrical power on reaching the maximum predetermined value is sufficient, the supply of electrical power to the connection is allowed and, once started up, cannot then be blocked or limited. This second index of importance can be assigned to the connections destined to supplying the electrical users in which a shutdown in functioning, once started up, might cause problems, such as for example happens with ovens and cooking burners. While the start of a cooking process can be spread over time, its halting usually causes irreparable deterioration of the foodstuffs.

A third index of importance corresponds to a continuously-controlled supply of electrical power which can be limited or blocked if the overall absorption of electrical power exceeds the maximum predetermined value. The third index of importance can be assigned to the connections destined to supply the electrical users which can be started off and stopped at any moment without causing particular problems, such as for example heating, clean hot water, dish-washers and other electrical domestic appliances. The first operating algorithm can also include further indices of intermediate importance for electrical users of different type. A further possibility of operating management by means of the first operating algorithm can include integration between the scale of the indices of importance and a temporal scheme of control of the supply of electrical power towards some electrical connections. With the exception of the electrical connections 3 to which the first index of importance is assigned, for the other electrical connections it is possible, in order to limit the overall absorption of electrical power, to supply electrical power only in certain time zones, for example during the night, as the overall absorption of electrical power is in any case low. In this way an attempt is made to limit peaks of absorption of electrical power.

The management of the supply of electrical power towards the electrical connections operated by the plant of the present invention enables considerably limiting overall absorption of electrical power and the consumption of electrical energy and maintaining it below a predetermined value. In this way, the energy requirement of a dwelling can be entirely covered by the use of renewable energy sources, for example solar panels, wind generators or the like. The electrical energy produced by the renewable sources can be sent into the grid via a bi-directional counter. The electrical energy required for the functioning of the various electrical users is taken from the grid also via the bi-directional counter. In this way, any peaks of electrical power which are not covered by the electrical power produced by renewable sources can be covered by the grid, and in any case the overall balance between the energy produced by the renewable sources and the energy consumed by the plant of the invention is substantially neutral or characterised by a prevalence of the energy produced by the renewable sources with respect to the grid supply.

The plant of the present invention comprises a heating device 6 predisposed to produce clean hot water comprising an instantaneous electric heater 7, able to raise the temperature of the water to a programmed temperature according to the available electrical power, functionally coupled to a small electric boiler 8 able to maintain the water at a constant temperature of or above 65°. The heated water in the electric boiler 8 can be removed in addition to the water coming from the instant heater 7 by means of a mixer 9, which is controlled in real-time by the control device 5, which is connected to one of the electrical connections 3 and is predisposed to mix the water at the desired temperature by combining the two solutions. The heating device 6 comprises an electric heater 7, of the instant type, connected to one of the electrical connections 3, which is predisposed to heat a flow rate at a first temperature. The heating device 6 further comprises a boiler 8 provided with a heater connected to another of the electric connections 3, which is predisposed to heat a determined quantity of water to a second temperature of 65° or more, which is higher than the first temperature. The electric heater 7 and the boiler 8 are supplied by a single conduit connected to a general hydraulic plant. A mixer 9 is predisposed to receive in inlet a flow of water coming from the boiler and a flow of water coming from the electric heater, and to produce in outlet a mixture between the two flows at a desired temperature which is intermediate between the first and the second temperature. This obviates the installing problem in traditional plants. The hot water pipes can be eliminated as the heating device can be connected directly at the point of use.

In the preferred embodiment of the plant, the heating device 6 comprises at least a first thermometer 10, predisposed to measure the temperature of the water in outlet from the mixer 9, and a flow-meter 11, predisposed to detect the presence of a water flow in outlet from the mixer 9. The instant electric heater 7, the heater of the boiler 8, the mixer 9, the first thermometer 10 and the flow-meter 11 are connected to the control device 5. In particular the control device 5 commands switching-on of the electric heater 7 and the heater of the boiler 8 and regulates the electric mixer 7 such as to vary the water flow which is removed from the boiler and mixed with the flow of water coming from the electric heater 7 on the basis of the temperature measured by the first thermometer 10. To this end the control device 5 works by means of a second algorithm on the basis of which, in the presence of a water flow detected by the flow meter 11, the electric heater 7 is switched on. The presence of a water flow can be determined for example by a user's opening a hot water tap.

If the temperature measured by the first thermometer 10 is lower than a requested temperature value, settable for example by means of the specially-programmed control device 5, the mixer 9 is regulated such as to increase the water flow rate from the boiler 8 which, as described above, is at the second temperature, corresponding substantially to the maximum temperature at which the water can be dispensed from the heating device 6. If the temperature measured by the first thermometer 10 is greater than or equal to the requested temperature, the mixer 9 is regulated such as to reduce or annul the flow of water removed from the boiler 8.

The functioning of the heating device 6 is extremely efficient and rational. The functional integration between the electrical heater 7 and the boiler 8 enables the electrical power required by the heater 7 to be reduced, as the heater 7 can be of such a size as to produce a predetermined flow of water at a variable temperature according to the availability of electrical energy with a maximum increase with respect to the temperature value of the water in inlet, which normally varies between 10°C and 15°C, of about 25°C, or in any case such as to enable a temperature of about 40°C to be reached, at maximum power, sufficient to cover the normal domestic needs while respecting Italian standards in the sector. If a higher water temperature is required, the removal of the water from the boiler 8, which is at a higher temperature than the water coming from the electric heater 7, adds to the flow of water coming from the electric heater 7 and raises the temperature thereof. In this way, as the boiler 8 does not have to supply the whole flow of hot water, it can be dimensioned in terms of both capacity and power, for example with a capacity of 60 litres to 80 litres and with a power of 1.5 Kw, very much lower than with normal domestic installations and thus with a lower electrical energy consumption. Further, the switching-on of the boiler 8, adequately insulated such as to limit heat loss, can be programmed by the control device 5 such as to intervene when overall absorption of electrical energy is lower, such as for example during the night-time hours. A second thermometer 18, connected to the control device 5, measures the temperature of the water contained in the boiler 8 in order to activate the requests at the control device 5 for switching on the heater of the boiler. A third thermometer 17 can further be connected to the control device 5 in order to measure the temperature of the water in outlet from the electric heater 7. The heating device 6 can also be autonomously functioning and thus replace the usual boilers using gas or other fuel. In this case the control device 5 is integrated internally of the heating device 6 itself.

The second algorithm performed by the control device is integrated in the first operating algorithm performed by the control device 5 by the attribution of the second index of importance to the electric heater 7 and the third index of importance to the heater of the boiler 8. The dispensing of hot water by the instant electric heater 7, once started, is thus guaranteed at a minimum temperature value. The increase of this temperature, with a removal of water from the boiler 8, is subordinated to the availability of electric power on reaching the maximum predetermined value. To this end the electric heater 7 can be realised such as to enable a regulation of the absorbed power between a minimum value and a maximum value which corresponds to a minimum value and a maximum value of the temperature to which the electric heater 7 can heat the water. If the maximum temperature reached is not sufficient to satisfy the desired temperature level, repair is made by removing hot water from the boiler 8, which is always available. The regulation of the power absorbed by the electric heater 7 can therefore be linked to the temperature requested for the water, but also the availability of electric power on reaching the maximum predetermined value: if the electrical power absorbed lowers or is annulled, the control device 5 reduces the electric power supply to the electric heater 7 to the minimum value.

The plant of the present invention further comprises a plurality of electric heating elements 12, predisposed to be located in various zones or rooms in the dwelling in which the plant is installed. The electric heating elements 12 are preferably radiating elements, locatable on the floor, on the ceiling or on the wall, which enable the zone or room in which they are installed to be heated by radiation. Each electric heating element 12 is connected to an electrical connection 3 and is controlled by the control device 5 by means of the first operating algorithm by attributing the third index of importanceto to the electric heating elements 12. The electric heating elements 12 overall define the dwelling's heating plant. The overall functioning of the heating plant is controllable by the control device 5 on the basis of the normal parameter controlling usual gas-boiler or diesel heating plants, i.e. time-programming of the functioning of the plant and the temperature to which the dwelling is to be heated.

The control of the electric heating elements 12 is done by means of a third operating algorithm, integrated in the first operating algorithm, on the basis of which, if the electric power available on reaching the maximum predetermined value is not sufficient for contemporaneous supply of all the electric heating elements, the control device 5 commands a temporary switching-off of at least an electric heating element 12 according to a predetermined time cycle such as to limit the total electric power absorbed by the electric heating elements at a lower or equal value to the power available in that instant on reaching the maximum predetermined value. In other words the heating of the dwelling or rooms or zones thereof to a determined temperature requires the switching-on of one or more electric heating elements 12 and thus supply of electric power to the electric heating elements 12. If the electric power available on reaching the maximum predetermined value does not allow dispensing of power towards one of the heating elements, one or more heating elements are switched off at predetermined time intervals such as to reduce the overall electric power absorbed. It is possible to have a scale of importance of the electric heating elements 12 on the basis of which some elements 12 cannot be switched off (for example those located in bathrooms), others can be unconditionally switched off, others besides can be turned off at each control cycle of the control device, or every two control cycles, every three cycles and so on. The switching-on and off of the various heating elements 12 can thus be regulated for example according to the type of room and the presence of people internally of the rooms such as to limit the instantaneous electric power absorbed overall by all the users and not to exceed the power available.

The plant of the present invention can also be provided with cooling devices which can be controlled by the third operating algorithm in an entirely similar way to the heating elements. A special cooling device which is integrated very efficiently into the plant of the present invention is constituted by geothermal heat pumps.

To limit absorption of the electric power on the part of the cooling devices the plant of the present invention can be provided with means for controlling the solar radiation. These means for controlling the solar radiation comprise, for example, curtains, shutters and/or blinds provided with motors which cause opening and closure thereof and are controlled by the control device 5. The management of the means for controlling the radiation by the control device 5 can be actuated via a timing program or by means of radiation sensors positioned externally of the dwelling.

The plant is advantageously provided with at least a rechargeable battery 13 which can dispense an electric power which is lower than that of the main source of electric power. The battery 13 preferably exhibits a supply voltage of 12V in direct current. The battery 13 is connected to the main source of electric power and is constantly supplied thereby. By means of suitable cables and connections the battery 13 supplies a plurality of low-power electric users 14. The low-power electric users 14 comprise, for example, lighting, the control device 5, domotic controllers 15, burglar alarm and fire alarm and in general the devices which, even in the case of a black-out, have to stay functional at least for a determined period of time. In order to limit the total absorption of electric power, the lighting devices are constituted by light sources having LED technology. An example of light sources that are particularly suitable to be integrated in the plant of the present invention is constituted by a bulb comprising a transparent or semi-transparent covering internally of which a determined number of LEDs are grouped in a bulb-fashion. The rechargeable battery 13 also supplies a plurality of domotic controllers 15, each of which is interposed between at least an electric connection 3 and the electric source 2. The domotic controllers 15 are further connected to the control device 5 which, via them, controls the electric power supply to the electric connections 3.

An important advantage of the plant of the present invention is that in the case of a black out of the electric grid the building provided with the invention continues to provide light for an overall period of not less than 12 hours thanks to the batteries which are always on charge and which will continue to dispense electrical energy even in the absence of a primary source.

The control device 5 can be provided with a communication peripheral, for example a keyboard or touch-screen monitor, which enables the users to change certain functioning parameters of the operating algorithms. It is possible for example to modify the attribution of the indices of importance to the electric connections 3, to change the timing program of the supply of electric power to the electric connections 3, to change the temperature at which it is desired to maintain the single rooms into which the construction is subdivided, and so on.

The plant of the present invention thus enables production of hot water for clean-water use, use of electric energy for cooking needs and obtaining heating of rooms by the use of only electric energy.

The instantaneous control and management of the overall electric power absorbed for the production of hot water and for heating and other users enables a limiting of the overall electric power absorbed below the normally available electric power for buildings for civil use. The instantaneous control and management of the overall electric power absorbed thus enables actuating all services that are normally present in civil-use buildings via electric users, completely eliminating the use of fossil fuels.

This control means that electric energy can be used at moment of need and the level of consumption can be constantly verified with the aim of determining the correspondence thereof to the projected profile and with lower consumption than the use thereof without the invention.

## Claims

1. A heating device for production of clean hot water, comprising: an instant electric heater (7), which is predisposed to heat a flow of water which flows there-through at a first temperature; a boiler (8) provided with an electric heater which is predisposed to heat a determined quantity of water to a second temperature which is higher than the first temperature; a mixer (9), predisposed to receive in inlet a flow of water coming from the boiler (8) and a flow of water coming from the electric heater (7) and for producing in outlet a mix between the two flows; a control device (5) which is predisposed to control the electric heater (7), the heater of the boiler (8) and the mixer (9).

2. The device of claim 1, comprising: a first thermometer (10), predisposed to measure a temperature of the flow of water in outlet from the mixer (9); a flow-meter (11), predisposed to detect a presence of a flow of water in outlet from the mixer (9); the first thermometer (10) and the flow-meter (11) being connected to the control device (5).

3. The device of claim 2, wherein the control device (5) is predisposed to command a switching-on of the instant electric heater (7) and the heater of the boiler (8) and is also predisposed to regulate the mixer (9) such as to vary a flow of water removed from the boiler (8) and mixed with the flow of water coming from the instant electric heater (7).

4. The device of claim 3, wherein the control device (5) controls the electric heater (7), the heater of the boiler (8), the mixer (9) by means of an operating algorithm on a basis of which, in a presence of a flow of water detected by the flow-meter (11), the electric heater (7) is commanded to be switched on and:
if a temperature measured by the first thermometer (10) is lower than a temperature requested, the mixer (9) is regulated such as to increase the flow removed from the boiler (8);
if the temperature measured by the first thermometer (10) is greater than or equal to the requested temperature, the mixer (9) is regulated such as to reduce or stop the flow of water removed from the boiler (8).

5. The device of claim 4, wherein the instant electric heater (7) and the heater of the boiler (8) are predisposed to be supplied at a low power, preferably in single phase.

6. A plant for supplying electric power to a building, wherein it comprises:
a source of electric power (2);
a plurality of electric connections (3), supplied by the source (2) by means of a supply circuit, predisposed to enable connection to the source (2) and supply to the electric users (3);
a control device (5) predisposed to continuously measure overall absorption of electric power by the electric users; to compare the overall absorption measured with a maximum predetermined value of available electric power; to block or limit dispensing of electric power to determined electric connections (3) if the overall absorption of electric power measured exceeds the maximum predetermined value;
the control device (5) being operative by means of a first main operating algorithm which: assigns determined indices of importance to the electric connections (3) which overall define a scale of importance of the electric connections (3); blocks or limits dispensing of electric power to an electric connection (3) on the basis of the index of importance thereof.
the main operating algorithm including at least: a first index of importance, to which a constant and unconditional dispensing of electric power corresponds; a second index of importance, to which a dispensing of electric power corresponds that is subordinated to a comparison between the electric power absorbed by the electric user on switching-on thereof and the electric power available on reaching the maximum predetermined value, the dispensing of electric power, if consented, not being thereafter blockable or limitable; a third index of importance, to which a dispensing of continuously-controlled electric power corresponds, which can be limited or blocked if the overall absorption of electric power exceeds the maximum predetermined value;
**characterised in that** the plant comprises a heating device for water according to one of the preceding claims.

7. The plant of claim 6, wherein the algorithm performed by the control device (5) for controlling the heating device is integrated in the first algorithm performed by the control device (5) through attribution of the second index of importance to the electric heater (7) and of the third index of importance to the heater of the boiler (8).

8. The plant of one of claims from 2 to 7, comprising a plurality of electric heating elements (12), predisposed to be located in various zones or rooms of a building, each of which is connected to an electric connection (3) and is controlled by the control device (5) by means of the first operating algorithm in which the third index of importance is attributed to the electric heating elements (12).

9. The plant of claim 8, wherein, if the available power on reaching the maximum predetermined value is not sufficient for contemporaneous supply to all the electric heating elements, the control device (5) commands a temporary switching-off of at least an electric heating element (12) in a predetermined timed cycle such as to limit the overall electric power absorbed by the electric heating elements (12) to a value which is less than or equal to the power available on reaching the maximum predetermined value.

10. The plant of one of the preceding claims, comprising at least a rechargeable battery (13) of electric energy which is constantly supplied by the source of electric power (2) and which in turn supplies a plurality of low-power electric users (14), wherein the first level of importance is attributed to the rechargeable battery (13).

11. The plant of claim 10, comprising a plurality of light sources (14) for integral illumination of the building, which are supplied by the rechargeable battery (13) with direct current at 12V or 24V.

12. The plant of claim 11, wherein the light sources (14) are LEDs.

13. The plant of claim 12, wherein the rechargeable battery (13) is of such a dimension as to be able to guarantee supply to the light sources (14) for at least 12 hours in a case of non-supply by the electric power source (2).

14. The plant of one of the preceding claims, comprising a plurality of domotic controllers (15), each of which is interposed between at least an electrical connection (3) and the source of electric power (2), the plurality of domotic controllers (15) being controlled by the control device (5) which, via the plurality of domotic controllers (15), controls dispensing of electrical power to the electric connections (3).

15. The plant of claim 12, wherein the domotic controllers (15) are supplied by the rechargeable battery (13).

16. The plant of one of the preceding claims, wherein the electric power source (2) comprises a device for production of electric energy from renewable sources.

17. The plant of one of the preceding claims, wherein the electric power source (2) is predisposed to be supplied at a low power, preferably in single-phase.

18. The plant of one of the preceding claims, comprising a pump heat device for heating, cooling and/or producing clean hot water.

## Patentansprüche

1. Heizvorrichtung zur Erzeugung von reinem Warmwasser, umfassend: einen Elektro-Durchlauferhitzer (7), der ausgelegt ist, um einen durch ihn strömenden Wasserstrom auf eine erste Temperatur zu erhitzen; einen Boiler (8), ausgestattet mit einer elektrischen Heizung, die ausgelegt ist, um eine bestimmte Wassermenge auf eine zweite Temperatur zu erhitzen, die höher ist als die erste Temperatur; einen Mischer (9), ausgelegt, um im Einlauf einen vom Boiler (8) einströmenden Wasserstrom und einen von der elektrischen Heizung (7) einströmenden Wasserstrom zu empfangen, und um im Auslass eine Mischung zwischen den zwei Strömen zu erzeugen; ein Steuergerät (5), das ausgelegt ist, um die elektrische Heizung (7), die Heizung des Boilers (8) und den Mischer (9) zu steuern.

2. Vorrichtung nach Anspruch 1, umfassend: ein erstes Thermometer (10), das ausgelegt ist, um eine Temperatur des aus dem Mischer (9) ausströmenden Wasserstroms zu messen; einen Strömungsmesser (10), der ausgelegt ist, um einen aus dem Mischer (9) ausströmenden Wasserstrom zu erfassen, wobei das erste Thermometer (10) und der Strömungsmesser (11) an das Steuergerät (5) angeschlossen sind.

3. Vorrichtung nach Anspruch 2, wobei das Steuergerät (5) ausgelegt ist, um ein Einschalten des Elektro-Durchlauferhitzers (7) und der Heizung des Boilers (8) zu steuern, und außerdem ausgelegt ist, um den Mischer (9) so zu regulieren, dass ein vom Boiler (8) entfernter Wasserstrom variiert und mit dem aus dem Elektro-Durchlauferhitzer (7) ausströmenden Wasserstrom vermischt wird.

4. Vorrichtung nach Anspruch 3, wobei das Steuergerät (5) die elektrische Heizung (7), die Heizung des Boilers (8) und den Mischer (9) mittels eines Betriebsalgorithmus steuert, auf dessen Grundlage die elektrische Heizung (7) eingeschaltet wird, wenn ein Wasserstrom vom Strömungsmesser (11) erfasst wurde, und:
der Mischer (9) so geregelt wird, dass der aus dem Boiler (8) entfernte Volumenstrom erhöht wird, wenn die vom ersten Thermometer (10) gemessene Temperatur unter einer erforderlichen Temperatur liegt;
der Mischer (9) so geregelt wird, dass der aus dem Boiler (8) entfernte Volumenstrom reduziert oder gestoppt wird, wenn die vom ersten Thermometer (10) gemessene Temperatur größer oder gleich der erforderlichen Temperatur ist.

5. Vorrichtung nach Anspruch 4, wobei der Elektro-Durchlauferhitzer (7) und die Heizung des Boilers (8) ausgelegt sind, um mit einer Niederspannung, vorzugsweise einphasig, gespeist zu werden.

6. Anlage zur Stromversorgung eines Gebäudes, wobei diese umfasst: eine Stromquelle (2);
eine Vielzahl elektrischer Anschlüsse (3), die von der Quelle (2) mittels eines Versorgungskreises gespeist werden, ausgelegt, um die Verbindung mit der Quelle (2) zu ermöglichen und die elektrischen Verbraucher (3) zu versorgen;
ein Steuergerät (5), ausgelegt, um die gesamte aufgenommene Stromstärke der elektrischen Verbraucher kontinuierlich zu messen; um die gemessene Gesamtaufnahme mit einem maximalen vorgegebenen Wert verfügbarer elektrischer Energie zu vergleichen; um die Stromverteilung an bestimmte elektrische Anschlüsse (3) zu unterbrechen oder zu begrenzen, wenn die gemessene gesamte aufgenommene Stromstärke den maximalen vorgegebenen Wert überschreitet;
wobei das Steuergerät (5) über einen ersten Hauptbetriebsalgorithmus betrieben wird, der: den elektrischen Anschlüssen (3) bestimmte Bedeutungsindizes zuordnet, die insgesamt eine Bedeutungsskala der elektrischen Anschlüsse (3) definieren; die Stromverteilung an einen elektrischen Anschluss (3) auf der Grundlage dessen Bedeutungsindex unterbricht oder begrenzt;
wobei der Hauptbetriebsalgorithmus mindestens umfasst: einen ersten Bedeutungsindex, dem eine kontinuierliche und unbedingte Stromverteilung entspricht; einen zweiten Bedeutungsindex, dem eine Stromverteilung entspricht, die von einem Vergleich zwischen der vom elektrischen Verbraucher bei dessen Einschaltung aufgenommenen Stromstärke und der Stromstärke abhängt, die beim Erreichen des maximalen vorgegebenen Werts verfügbar ist, wobei die Stromverteilung, sofern zulässig, danach nicht mehr unterbrochen oder begrenzt werden kann; einen dritten Bedeutungsindex, dem eine kontinuierlich überwachte Stromverteilung entspricht, die begrenzt oder unterbrochen werden kann, wenn die gesamte aufgenommene Stromstärke den maximalen vorgegebenen Wert überschreitet;
**dadurch gekennzeichnet, dass** diese Anlage eine Heizvorrichtung für Wasser nach einem der vorhergehenden Ansprüche umfasst.

7. Anlage nach Anspruch 6, wobei der vom Steuergerät (5) durchgeführte Algorithmus zur Steuerung der Heizvorrichtung in den ersten Algorithmus integriert ist, der vom Steuergerät (5) mittels der Zuweisung des zweiten Bedeutungsindex an die elektrische Heizung (7) und des dritten Bedeutungsindex an die Heizung des Boilers (8) durchgeführt wird.

8. Anlage nach einem der Ansprüche 2 bis 7, umfassend eine Vielzahl elektrischer Heizelemente (12), die ausgelegt sind, um in verschiedenen Zonen oder Räumen eines Gebäudes platziert zu werden, wobei jedes davon an einen elektrischen Anschluss (3) angeschlossen ist und über das Steuergerät (5) mittels des ersten Betriebsalgorithmus gesteuert wird, wobei den elektrischen Heizelementen (12) der dritte Bedeutungsindex zugeordnet wird.

9. Anlage nach Anspruch 8, wobei das Steuergerät (5), wenn die Stromstärke, die beim Erreichen des maximalen vorgegebenen Werts verfügbar ist, nicht ausreicht, um gleichzeitig alle elektrischen Heizelemente zu speisen, eine vorübergehende Ausschaltung von mindestens einem elektrischen Heizelement (12) in einem vorgegebenen zeitgeschalteten Zyklus steuert, um die gesamte Stromstärke, die von den elektrischen Heizelementen (12) aufgenommen wird, auf einen Wert zu reduzieren, der kleiner oder gleich der Stromstärke ist, die beim Erreichen des maximalen vorgegebenen Werts verfügbar ist.

10. Anlage nach einem der vorhergehenden Ansprüche, umfassend mindestens eine wiederaufladbare Strombatterie (13), die kontinuierlich über die Stromquelle (2) gespeist wird und wiederum eine Vielzahl von elektrischen Niederspannungsverbrauchern (14) versorgt, wobei das erste Bedeutungsniveau der wiederaufladbaren Batterie (13) zugeordnet wird.

11. Anlage nach Anspruch 10, umfassend eine Vielzahl von Lichtquellen (14) für die vollständige Beleuchtung des Gebäudes, die über die wiederaufladbare Batterie (13) mit 12-V- oder 24-V-Gleichstrom versorgt werden.

12. Anlage nach Anspruch 11, wobei es sich bei den Lichtquellen (14) um LEDs handelt.

13. Anlage nach Anspruch 12, wobei die wiederaufladbare Batterie (13) so dimensioniert ist, dass sie die Versorgung der Lichtquellen (14) für mindestens 12 Stunden garantiert, wenn die Stromquelle (2) ausfällt.

14. Anlage nach einem der vorhergehenden Ansprüche, umfassend eine Vielzahl an Haustechniksteuerungen (15), von denen jede zwischen mindestens einem elektrischen Anschluss (3) und der Stromquelle (2) eingesetzt ist, wobei die Vielzahl an Haustechniksteuerungen (15) über das Steuergerät (5) gesteuert wird, das über die Vielzahl an Haustechniksteuerungen (15) die Stromverteilung an die elektrischen Anschlüsse (3) steuert.

15. Anlage nach Anspruch 12, wobei die Haustechniksteuerungen (15) über die wiederaufladbare Batterie (13) gespeist werden.

16. Anlage nach einem der vorhergehenden Ansprüche, wobei die Stromquelle (2) eine Vorrichtung zur Erzeugung von Elektrizität aus erneuerbaren Quellen umfasst.

17. Anlage nach einem der vorhergehenden Ansprüche, wobei die Stromquelle (2) ausgelegt ist, um bei Niederspannung, vorzugsweise einphasig, versorgt zu werden.

18. Anlage nach einem der vorhergehenden Ansprüche, umfassend eine Pumpenheizvorrichtung zum Erhitzen, Kühlen und/oder Erzeugen von reinem Warmwasser.

## Revendications

1. Installation de chauffage servant à la production d'eau chaude pure, comprenant : un réchauffeur électrique instantané (7), conçu pour chauffer un débit d'eau qui s'écoule en son sein à une première température ; une chaudière (8) pourvue d'un réchauffeur électrique conçue pour chauffer une quantité d'eau déterminée à une seconde température étant supérieure à la première température ; un mélangeur (9) conçu pour recevoir en entrée un débit d'eau provenant de la chaudière (8) et un débit d'eau provenant du réchauffeur électrique (7) et conçu pour produire en sortie un mélange entre les deux débits ; un dispositif de commande (5) conçu pour commander le réchauffeur électrique (7), le réchauffeur de la chaudière (8) et le mélangeur (9).

2. Dispositif selon la revendication 1, comprenant : un premier thermomètre (10), conçu pour mesurer une température du débit de l'eau en sortie du mélangeur (9) ; un débitmètre (11), conçu pour détecter la présence d'un débit d'eau en sortie du mélangeur (9) ; le premier thermomètre (10) et le débitmètre (11) étant reliés au dispositif de commande (5).

3. Dispositif selon la revendication 2, dans lequel le dispositif de commande (5) est conçu pour commander un allumage du réchauffeur électrique instantané (7) et du réchauffeur de la chaudière (8) et est aussi conçu pour régler le mélangeur (9) de manière à modifier un débit d'eau prélevé de la chaudière (8) et mélangé au débit d'eau provenant du réchauffeur électrique instantané (7).

4. Dispositif selon la revendication 3, dans lequel le dispositif de commande (5) contrôle le réchauffeur électrique (7), le réchauffeur de la chaudière (8) et le mélangeur (9) au moyen d'un algorithme d'exploitation sur la base duquel, en présence d'un débit d'eau détecté par le débitmètre (11), le réchauffeur électrique (7) est commandé pour être allumé et :
si la température mesurée par le premier thermomètre (10) est inférieure à une température désirée, le mélangeur (9) est réglé de manière à augmenter le débit prélevé de la chaudière (8) ;
si la température mesurée par le premier thermomètre (10) est supérieure ou égal à la température désirée, le mélangeur (9) est réglé de manière à réduire ou interrompre le débit d'eau prélevé de la chaudière (8).

5. Dispositif selon la revendication 4, dans lequel le réchauffeur électrique instantané (7) et le réchauffeur de la chaudière (8) sont conçus pour être alimentés à basse puissance, de préférence monophasée.

6. Equipement d'alimentation électrique d'un bâtiment, dans lequel il comprend : une source d'énergie électrique (2) ;
une pluralité de connexions électriques (3), alimentées par la source (2) au moyen d'un circuit d'alimentation, conçu pour permettre le raccordement à la source (2) et pour alimenter les appareils électriques (3) ;
un dispositif de commande (5) conçu pour mesurer continuellement l'absorption totale d'énergie électrique par les appareils électriques afin de comparer l'absorption totale mesurée avec une valeur maximale prédéterminée d'énergie électrique disponible ; afin de bloquer ou de limiter la distribution d'énergie électrique vers des connexions électriques déterminées (3) si l'absorption totale d'énergie électrique mesurée dépasse la valeur maximale prédéterminée ; Dispositif de commande (5) étant fonctionnel au moyen d'un premier algorithme d'exploitation principal qui : affecte des indices déterminés d'importance aux connexions électriques (3) qui globalement définissent une échelle d'importance des connexions électriques (3) ; des blocs ou des limites distribuant de l'énergie électrique à une connexion électrique (3) sur la base de son indice d'importance.
l'algorithme d'exploitation principal incluant au moins : un premier indice d'importance, auquel correspond une distribution d'énergie électrique constante et inconditionnelle ; un second indice d'importance, auquel correspond une distribution d'énergie électrique étant subordonnée à une comparaison entre l'énergie électrique absorbée par l'appareil électrique à l'allumage et l'énergie électrique disponible au moment d'atteindre la valeur maximale prédéterminée, la distribution d'énergie électrique, si autorisée, ne pouvant pas, par suite, être bloquée ou limitée ; un troisième indice d'importance, auquel correspond une distribution d'énergie électrique contrôlée en permanence, pouvant être limitée ou bloquée si l'absorption totale d'énergie électrique dépasse la valeur maximale prédéterminée ;
**caractérisé en ce que** l'équipement se compose d'une installation de chauffage d'eau selon l'une des revendications précédentes.

7. Equipement selon la revendication 6, dans lequel l'algorithme effectué par le dispositif de commande (5) servant à contrôler l'installation de chauffage est intégré dans le premier algorithme effectué par le dispositif de commande (5) à travers l'attribution du second indice d'importance au réchauffeur électrique (7) et du troisième indice d'importance au réchauffeur de la chaudière (8).

8. Equipement selon l'une des revendications de 2 à 7, comprenant une pluralité d'éléments chauffants électriques (12), conçus pour être placés à différents endroits ou dans différentes pièces d'un bâtiment, chacun étant relié à une connexion électrique (3) et étant contrôlé par le dispositif de commande (5) au moyen du premier algorithme d'exploitation dans lequel le troisième indice d'importance est attribué aux éléments chauffants électriques (12).

9. Equipement selon la revendication 8, dans lequel, si l'énergie disponible est insuffisante pour alimenter en même temps tous les éléments chauffant électriques, lorsque la valeur maximale prédéterminée est atteinte, le dispositif de commande (5) commande une interruption temporaire d'au moins un élément chauffant électrique (12) pendant la durée d'un cycle prédéterminée de manière à limiter l'énergie électrique totale absorbée par les éléments chauffants électriques (12) à une valeur étant inférieure ou égale à l'énergie disponible lorsque la valeur maximale prédéterminée est atteinte.

10. Equipement selon l'une des revendications précédentes, comprenant au moins une batterie rechargeable (13) d'énergie électrique étant constamment alimentée par la source d'énergie électrique (2) et qui à son tour alimente une pluralité d'appareils électriques (14) à basse puissance, dans lequel le premier niveau d'importance est attribué à la batterie rechargeable (13).

11. Equipement selon la revendication 10, comprenant une pluralité de sources lumineuses (14), servant à éclairer intégralement le bâtiment, étant alimentées par la batterie rechargeable (13) en courant continu à 12 ou 24 Volts.

12. Equipement selon la revendication 11, dans lequel les sources lumineuses (14) sont des diodes électroluminescentes.

13. Equipement selon la revendication 12, dans lequel la batterie rechargeable (13) possède des dimensions qui puissent lui permettre d'assurer l'alimentation des sources lumineuses (14) pendant au moins 12 heures si ces sources ne sont plus alimentées par la source d'énergie électrique (2).

14. Equipement selon l'une des revendications précédentes, comprenant une pluralité de contrôleurs domotiques (15), étant chacun interposé entre au moins une connexion électrique (3) et la source d'énergie électrique (2), la pluralité de contrôleurs domotiques (15) étant contrôlés par le dispositif de commande (5) qui, par le biais de la pluralité de contrôleurs domotiques (15), commande la distribution d'énergie électrique aux connexions électriques (3).

15. Equipement selon la revendication 12, dans lequel les contrôleurs domotiques (15) sont alimentés par la batterie rechargeable (13).

16. Equipement selon l'une des revendications précédentes, dans lequel la source d'énergie électrique (2) comprend un dispositif destiné à la production d'énergie électrique à partir de sources renouvelables.

17. Equipement selon l'une des revendications précédentes, dans lequel la source d'énergie électrique (2) est conçue pour être alimentée à basse puissance, de préférence monophasée.

18. Equipement selon l'une des revendications précédentes, comprenant un dispositif de pompe à chaleur servant à chauffer, refroidir et/ou produire de l'eau chaude pure.
